# EUROPÄISCHE PATENTANMELDUNG

(11) **EP 0 986 203 A2**
(43) Veröffentlichungstag der Anmeldung: **15.03.2000**
(21) Anmeldenummer: 99117659.5
(22) Anmeldetag: 07.09.1999
(51) Int. Cl.: H04J 3/14, H04Q 11/04

(54) **Behandlung von Störungssituationen in einem Netzknoten**

(30) Priorität: 07.09.1998 DE 19840828
(71) Anmelder: SIEMENS AKTIENGESELLSCHAFT, 80333 München (DE)
(72) Erfinder: Renger, Wolfgang, 80686 München (DE)

(57) **Zusammenfassung**

Ein Verfahren zur Behandlung einer Störungssituation innerhalb eines Netzknotens eines Telekommunikationsnetzes. Wenn eine Störung (fhl) hinsichtlich eines Betriebsmittels des Netzknotens festgestellt wird, wird eine Störungsschaltung eingeleitet und das betroffene Betriebsmittel außer Betrieb genommen; gegebenenfalls werden die Aufgaben des Betriebsmittels von einem Ersatzbetriebsmittel übernommen. Seitens des Netzknotens ist eine Steuerungslogik mit Instanzen zur Verwaltung der Betriebsmittel und der diesen zugeordneten Steuerelemente vorgesehen. Nach Ablauf eines Fehlerbehandlungs-Zeitintervalls (t1) ab Feststellung der Störung werden gemäß einer vorgegebenen Fehlerbehandlungs-Vorschrift ausgewählte Instanzen aufgrund des zu diesem Zeitpunkt vorliegenden Betriebszustandes der Betriebsmittel bzw. Ersatzbetriebsmittel konfiguriert. Von der Störungsschaltung wird ein vom Fehlerbehandlungs-Zeitintervall unabhängiges Fehlerschutz-Zeitintervall (t2) ausgelöst; nach Ablauf des Fehlerschutz-Zeitintervalls (t2) werden gemäß einer vorgegebenen Fehlerschutz-Vorschrift ausgewählte Instanzen aufgrund des zu diesem Zeitpunkt vorliegenden Betriebszustandes der Betriebsmittel bzw. Ersatzbetriebsmittel konfiguriert.

## Beschreibung

Die Erfindung betrifft ein Verfahren zur Behandlung einer Störungssituation innerhalb eines Netzknotens eines Telekommunikationsnetzes, wobei seitens des Netzknotens Betriebsmittel zur Durchführung von Telekommunikationsdiensten sowie eine Steuerungslogik mit Instanzen zur Verwaltung der Betriebsmittel und der diesen zugeordneten Steuerelemente vorgesehen sind, bei welchem
- eine Störung hinsichtlich zumindest eines Betriebsmittels festgestellt wird,
- woraufhin eine Störungsschaltung eingeleitet wird, wobei das zumindest eine von der Störung betroffene Betriebsmittel außer Betrieb genommen wird und im Falle, daß entsprechende Ersatzbetriebsmittel vorgesehen und bereit sind, von diesen die Aufgaben des zumindest einen Betriebsmittels übernommen werden,
- sowie nach Ablauf eines Fehlerbehandlungs-Zeitintervalls ab Feststellung der Störung gemäß einer vorgegebenen Fehlerbehandlungs-Vorschrift ausgewählte Instanzen aufgrund des zu diesem Zeitpunkt vorliegenden Betriebszustandes der Betriebsmittel bzw. Ersatzbetriebsmittel einschließlich der Steuerelemente konfiguriert werden.

Netzknoten, wie sie für die Zwecke der Erfindung von Belang sind, sind beispielsweise automatisierte Vermittlungssysteme moderner Telekommunikationsnetze, z.B. das sogenannte EWSX-System der Anmelderin, an welches SDH-Anschlüsse (sogenannte 'SDH links') gemäß den Empfehlungen ITU-T G.707, G.708 und G.709 der Internationalen Telekommunikationsvereinigung (ITU) anschließbar sind.

Für Anschlüsse mit Bitraten von 155 Mbit/s oder darüber ist die Möglichkeit einer Leitungsredundanz vorgesehen, die in Form einer Sicherungsschaltung realisiert ist. Bei der Sicherungsschaltung werden für die dem Anschluss zugeordneten Hardware-Elemente und Datenobjekte ( 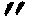 gesicherte" Elemente) zusätzliche, an sich redundante Elemente ( 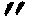 sichernde" Elemente) bereitgestellt und in einem Standby-Betrieb gehalten. Im Falle einer Störung der 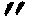 gesicherten" Elemente können die 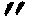 sichernden" Elemente die Aufgabe der ausgefallenen Elemente übernehmen und so einen weitgehend störungsfreien Betrieb aufrechterhalten. Eingehendere Informationen zur Sicherungsschaltung gehen aus der Empfehlung ITU-T G.774.03 der ITU hervor.

Die genannten ITU-Normen definieren für die Zwecke der Verwaltung und Steuerung der 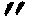 physikalischen" SDH-Anschlüsse eine 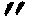 logische" Darstellung , auf welche die 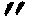 physikalische" Architektur der Anschlüsse, soweit für die Steuer- bzw. Verwaltungsaufgaben von Bedeutung, abgebildet wird. Zur Darstellung der physikalischen Betriebsmittel und der diesen zugeordneten Steuerelemente einschließlich der logischen Einheiten eines Dienstes werden Dateninstanzen einer Steuerlogik verwendet; durch die Dateninstanzen werden jeweils die Betriebsmittel und Steuerelemente im Rahmen der Steuerlogik des Netzknotens repräsentiert. Die Instanzen sind in den meisten technischen Realisierungen Datenobjekte eines oder mehrerer innerhalb des EWSX-Systems ablaufenden Datenverarbeitungsprogramme, können jedoch grundsätzlich auch beispielsweise durch feste elektronische Baugruppen implementiert werden. Für die Instanzen werden in den Normen eigene Namen definiert, die auf den englischen Bezeichnungen der Anschluss-Elemente beruhen. Diese Namen stellen neugeschaffene Eigennamen dar, weshalb in dieser Beschreibung sowie in den beigefügten Figuren für die Instanzen die in den ITU-Normen definierten Namen der Instanzen um der Klarheit willen beibehalten werden sollen.

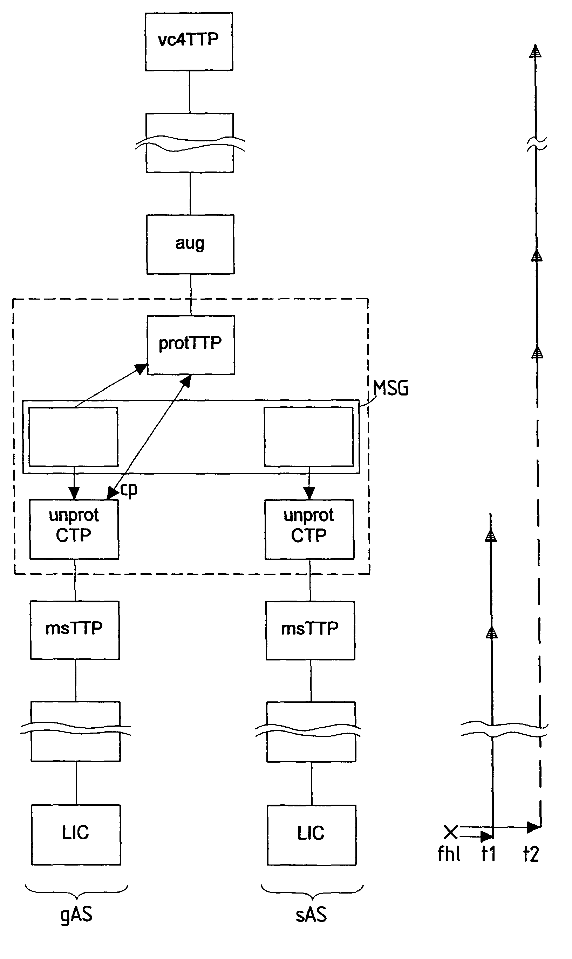

Die Beziehungen, z.B. die Zuordnung eines Elements zu einem anderen oder das Enthalten eines Elements als Komponente in einem anderen, zwischen den Instanzen werden den 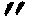 physikalischen" Beziehungen nachmodelliert. Für ein Beispiel einer solchen Struktur sei zum besseren Verständnis auf die beigefügte Zeichnung verwiesen, wobei vorerst nur der linke Teil der Zeichnung betrachtet werden soll, welcher in vereinfachter Form das Objektmodell für einen SDH-Anschluss mit Leitungsredundanz gemäß den genannten ITU-Empfehlungen zeigt.

In der Figur sind die Komponenten des SDH-Anschlusses gezeigt, oder genauer gesagt, die sie repräsentierenden Instanzen. Beispielsweise repräsentiert die LIC-Instanz eine der Anschlußeinrichtungen des EWSX-Systems (ein sogenanntes LIC, 'line interface circuit'), welche als 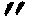 physikalische" Komponente zur Realisierung der hier betrachteten SDH-Anschlüsse dient. Verbindungslinien zwischen Instanzen kennzeichnen Zuordnungsrelationen oder in einzelnen Fällen auch Komponentenbeziehungen. Die LIC-Instanz stellt das eine Ende einer Anordnung der Instanzen dar; eine Änderung der Verfügbarkeit in einer Instanz wirkt sich innerhalb dieser Anordnung derart aus, daß die Änderung entlang den in der Zeichnung von unten nach oben laufenden Verbindungen an die darüberliegenden ( 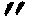 nachfolgenden") Instanzen weitergegeben wird. Ab der weiter unten erläuterten protTTP-Instanz liegen den Instanzen keine physikalischen Elemente oder deren Steuerelemente mehr zugrunde, sondern Steuerelemente von Diensten, für die der SDH-Anschluss verwendet wird. Es sei darauf hingewiesen, daß in der Zeichnung der Übersichtlichkeit und der Kürze der Darstellung halber nur die wesentlichen Elemente der Instanzen-Anordnung gezeigt sind.

In der Zeichnung sind als der Anschlußeinrichtung bzw. der LIC-Instanz nachfolgendes Betriebselement eine msTTP-Instanz ('multiplex section trail termination point') gezeigt, die einen Multiplex-Abschnitt der Anschlußeinrichtung repräsentiert. Durch die Instanzen LIC bis msTTP ist ein SDH-Anschluss charakterisiert, wobei aufgrund der Leitungsredundanz zwei Anschlüsse gAS,sAS vorgesehen sind. Diesen Instanzen wiederum sind die Instanzen der Dienstelemente zugeordnet, wovon in der Zeichnung beispielhaft eine aug-Instanz ('administrative unit group') und eine vc4TTP-Instanz ('virtual container 4 trail termination point') gezeigt sind, die verschiedene dienstbezogene Aufgaben des SDH-Anschlusses erfüllen, die freilich für die Erfindung nicht von Belang sind. Allerdings sei angemerkt, daß die Verfügbarkeit sämtlicher den SDH-Anschluss nutzenden Dienste anhand der vc4TTP-Instanz bestimmt wird; somit ist die Konfiguration dieser Instanz von zentraler Bedeutung für den Betrieb dieser Dienste.

Wenn eine Störung in einem oder mehreren der Betriebsmittel, die im Rahmen des SDH-Anschlusses bzw. der zugeordneten Dienste verwendet werden, auftritt, wird dies auf seiten der Steuerung des EWSX-Systems festgestellt. Die von der Störung betroffenen Betriebsmittel sowie bestimmte diesen Betriebsmitteln zugeordneten Komponenten werden außer Betrieb genommen, und eine Protokollmeldung betreffend Art und Ausmaß der Störung wird an das Bedienpersonal oder in eine Protokolldatei ausgegeben. Falls für die Steuerelemente der Dienste nicht mehr die benötigten Betriebselemente zur Verfügung stehen, weil die hierfür in Frage kommenden Elemente außer Betrieb sind, werden auch die so betroffenen Steuerelemente außer Betrieb genommen. Dies hat gewöhnlich auch die Beendigung der entsprechenden Dienste zur Folge. Inwieweit ungesperrte Betriebselemente für die Steuerelemente vorhanden sein müssen, ergibt sich aufgrund einer vorgegebenen Fehlerbehandlungs-Vorschrift, z.B. gemäß den genannten ITU-Empfehlungen aufgrund der in der Zeichnung wiedergegebenen Objekt-Anordnung. Eine Störung kann z.B. eine Fehlfunktion oder ein Ausfall einer Komponente sein; welcher Art diese Störung ist und auf welche Weise sie festgestellt wird, ist für die Erfindung freilich ohne Belang.

Beim Auftreten z.B. eines Ausfalls einer Betriebsmittelkomponente wird die dem ausgefallenen Objekt entsprechende Instanz dahingehend konfiguriert, daß der Fehlerzustand in der Instanz gekennzeichnet ist. Gleichfalls werden die gemäß der Instanzen-Anordnung nachfolgende Instanzen aufgrund des Fehlers konfiguriert. Tritt beispielsweise ein Fehler in einem Anschlußeinrichtung auf, so resultiert dies in einem Fehlermerkmal der dieser Einheit zugeordneten LIC-Instanz; die LIC-Instanz und die dieser nachfolgenden Instanzen bis zur msTTP-Instanz sowie der im folgenden erläuterten unprotCTP-Instanz werden dem Fehler entsprechend konfiguriert, also in diesem Falle gesperrt, sowie gegebenenfalls dieser nachgeordnete Dienstinstanzen.

Fehler auf der Anschlußeinrichtung sowie der ihr zugeordneten Komponenten, beispielsweise der seriellen Schnittstelle, führen somit mittelbar zu einer Konfiguration der zugehörenden msTTP-Instanz als gesperrt. Aufgrund der Leitungsredundanz werden zwei Anschlüsse bereitgestellt, von denen einer als 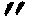 gesicherter Anschluß" gAS den Nachrichtenverkehr unterhält, während der andere als 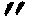 sichernder Anschluß" sAS Ersatzelemente bzw. eine Ersatzleitung für die Betriebselemente des gesicherten Anschlusses gAS bereithält, um im Fall einer Ersatzschaltung aufgrund eines Fehlers im gesicherten Anschluß den Verkehr zu übernehmen. Zu diesem Zweck sind zwei voneinander unabhängige, sogenannte 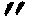 ungeschützte" unprotCTP-Instanzen ( 'unprotected connection termination point') vorgesehen, die jeweils einem der Anschlüsse gAS, sAS zugeordnet sind und gemeinsam eine protTTP-Instanz ( 'protected trail termination point') schützen. Die der Sicherungschaltung dienenden Objekte sind in der Zeichnung mit einem unterbrochen gezeichneten Rechteck umgeben dargestellt. Hierzu gehört unter anderem eine Instanz einer sogenannten Multiplex-Sicherungsgruppe MSG, über welche beide Anschlüsse gAS,sAS zugreifbar sind. Weiters besteht mittels eines Zuordnungszeiger cp eine Zuordnung der geschützten Dienstelement-Instanzen protTTP,aug,vc4TTP zu dem geschützten Anschluss gAS. Aufgrund einer Ersatzschaltung sind somit Ersatzbetriebselemente vorgesehen, welche bei einem Ausfall der korrespondierenden Betriebselemente deren Aufgaben übernehmen können.

Beim Auftreten von Fehlern hängt somit die Konfiguration der vc4TTP-Instanz und der darauf beruhenden Dienste von der fehlerfreien Verfügbarkeit der protTTP-Instanz ab, und diese wiederum von einer effizient funktionierenden Ersatzschaltung. Die zeitlichen Anforderungen bezüglich der Ersatzschaltung sind sehr hoch, um im Falle einer Störung innerhalb einer kurzen Zeitspanne - ein typischer Wert hierfür ist beispielsweise 50 ms - über die Ersatzleitung sAS die Dienste bereitzustellen. Andererseits ist es nicht sinnvoll, die Ausführung eines Dienstes etwa aufgrund einer vorübergehenden, lediglich kurzzeitigen Störung abzubrechen, wenn es z.B. günstiger ist, die Behebung der Störung abzuwarten. Zudem können solche kurzzeitigen Störungen zu einer hohen Zahl von Protokollmeldungen von vergleichsweise geringer Wichtigkeit (bei nur vorübergehenden Störungen) führen, die unter Umständen durch ihre Häufigkeit über andere, gravierendere Fehler hinwegtäuschen und somit eine Überwachung des Betriebes durch das Bedienpersonal erschweren.

Aus diesem Grund wird die Ersatzschaltung der Betriebsmittel unmittelbar nach Feststellung der Störung durchgeführt, jedoch die Konfiguration der zugeordneten Instanzen zeitlich bewertet. Die zeitliche Bewertung bedeutet hierbei, daß die Auswirkungen einer Störung nicht unmittelbar, sondern in Bezug auf einen gewissen Zeitraum ab Eintreten einer Störung (und gegebenenfalls deren kurz darauf eintretende Behebung) beurteilt, wodurch eine Protokollmeldung nur bei längeren Störungen erfolgt. Zugleich wird erreicht, daß die Dienstverfügbarkeit aufgrund lediglich kurzzeitiger Störungen nicht zu empfindlich reagiert. Zu diesem Zweck wird bei der Feststellung der Störung ein Fehlerbehandlungs-Zeitintervall eingeleitet, und erst nach dessen Ablauf wird eine Auswertung durchgeführt, ob und inwieweit Instanzen aufgrund der Störung als gesperrt zu konfigurieren sind. Hierbei wird der Betriebszustand der Betriebsmittel unter Berücksichtigung von Ersatzschaltungen u. dgl. zugrundegelegt.

Bei dieser bekannten Lösung erfolgen jedoch einerseits die Ausgabe der Protokollmeldungen betreffend die Störungen und den dadurch betroffenen Betriebszustand und andererseits die Verwaltung der Dienstverfügbarkeit stets gemeinsam, obgleich diese grundsätzlich verschiedene Betriebsaspekte betreffen und, insbesondere beim Vorliegen einer Ersatzschaltung, voneinander unabhängig durchzuführen sein können.

Es ist daher Aufgabe der Erfindung, die unmittelbare Reaktion auf das Auftreten einer Störung und die entsprechende korrekte Konfiguration der zugeordneten Instanzen zu gewährleisten, und zugleich sowohl die Überwachung der Betriebsmittel und die davon abhängigen Dienste, als auch eine möglichst sichere und zugleich hohe Verfügbarkeit der Dienste zu ermöglichen.

Diese Aufgabe wird ausgehend von einem Verfahren der eingangs dargestellten Art dadurch gelöst, daß gemäß der Erfindung von der Störungsschaltung ein vom Fehlerbehandlungs-Zeitintervall unabhängiges Fehlerschutz-Zeitintervall ausgelöst wird und daß nach Ablauf des Fehlerschutz-Zeitintervalls gemäß einer vorgegebenen Fehlerschutz-Vorschrift ausgewählte Instanzen aufgrund des zu diesem Zeitpunkt vorliegenden Betriebszustandes der Betriebsmittel bzw. Ersatzbetriebsmittel einschließlich der Steuerelemente konfiguriert werden.

Durch diese Lösung gelingt eine Entkoppelung der Störungsbehandlung und -überwachung gegenüber der Behandlung der Dienstverfügbarkeit. Die Leitungsersatzschaltung wird im Falle einer Störung in zwei Teilen durchgeführt, wodurch die Bewertung der Verfügbarkeit der Dienste unabhängig von dem Zeitpunkt der Durchführung der Ersatzschaltung und der Konfiguration der entsprechenden Instanzen stattfinden kann. Dadurch ist gewährleistet, daß unabhängig von den zeitlichen Ereignissen, wann und für wie lange Fehlersituationen vorliegen, stets die richtige Antwortaktionen, z.B. die Freigabe oder das Sperren eines Dienstes, erfolgt sowie eine konsistente Datenbasis vorliegt, worin der Zustand der Instanzen zueinander und mit den verwalteten Betriebsmittel übereinstimmt. Der erste Teil der Konfiguration wird in Abhängigkeit von den Änderungen aufgrund des Fehlerzustandes durchgeführt und ist erfindungsgemäß vom zweiten Teil entkoppelt. In dem zweiten Teil, welcher von den Ereignissen in der Ersatzschaltung abhängig ist, wird der sich ergebende Zustand berücksichtigt und aufgrund dessen überprüft, ob eine Änderung in bezug auf den bisher eingetragenen Zustand ergeben hat; sofern dies der Fall ist, wird eine entsprechende Konfigurierung durchgeführt.

Auch können aufgrund der Erfindung konfigurationsbedingte Maßnahmen, welche nicht zu einer Umschaltung führen, berücksichtigt werden. Wird z.B. ein Objekt administrativ gesperrt, etwa für die Dauer einer Wartung als nicht verfügbar gekennzeichnet, so wird dies auf korrekte Art und Weise berücksichtigt.

In einer vorteilhaften Ausführungsform der Erfindung wird das Fehlerschutz-Zeitintervall nur dann ausgelöst, wenn bei Anwendung der Fehlerschutz-Vorschrift auf den aufgrund des Einleitens der Störungsschaltung sich ergebenden Betriebszustand zumindest eine Instanz ausgewählt würde. Hierdurch lässt sich in vielen Fällen der mit dem Ablauf des Fehlerschutz-Intervalles und der anschließenden Auswertung verbundenen Aufwand vermeiden.

Es ist des weiteren günstig, wenn das Fehlerschutz-Zeitintervall zugleich mit dem Fehlerbehandlungs-Zeitintervall abläuft.

Zweckmäßigerweise wird die Zuordnung der Instanzen zur Fehlerbehandlungs- bzw. zur Fehlerschutz-Behandlung derart gestaltet, daß die Fehlerbehandlungs-Vorschrift zumindest jene Instanzen, welche den durch Ersatzmittel ersetzbaren Betriebsmitteln und Steuerelementen sowie den diesen zugeordneten Ersatzmitteln entsprechen, betrifft, wogegen die Fehlerschutz-Vorschrift die übrigen Instanzen betrifft.

Günstigerweise kann die Erfindung auch bei zumindest teilweiser Behebung der Störung hinsichtlich zumindest eines Betriebsmittels eingesetzt werden, wobei jedoch in der Störungsschaltung das zumindest eine von der Störungsbehebung betroffene Betriebsmittel in Betrieb genommen wird und zugeordnete Ersatzbetriebsmittel, sofern diese durch die Inbetriebnahme des zumindest einen Betriebsmittels entlastet sind, wieder in Bereitschaft versetzt werden. Dabei können die übrigen Schritte des erfindungsgemäßen Verfahrens, insbesondere die Durchführung der Fehlerbehandlung- und Fehlerschutz-Intervalle und die Auswertung der zugeordneten Vorschriften, in gleicher Art durchgeführt werden.

Die Erfindung wird im folgenden anhand eines Ausführungsbeispieles für SDH-Anschlüsse des bereits genannten EWSX-Systems unter Bezugnahme auf die Zeichnung näher erläutert, wobei nunmehr auch der rechte Teil der Zeichnung zu beachten ist.

Beim Auftreten einer - in der Zeichnung durch ein Kreuz fhl symbolisierten - Störung, welche z.B. auf eine Unterbrechung in einer Anschlußverbindung der Anschlußeinrichtung, die durch die LIC-Instanz des geschützten Anschlusses gAS repräsentiert wird, zurückgeht, wird unverzüglich, also innerhalb einer Zeitdauer von beispielsweise 50 ms, eine Ersatzschaltung der korrespondierenden Betriebsmittel durchgeführt, und der Zuordnungszeiger cp der Multiplex-Sicherungsgruppe MSG wird auf jenen Anschluss gelegt, welcher nunmehr den Betrieb übernimmt.

Im übrigen ist die hier betrachtete Ersatzschaltung, bei der im Störungsfall Ersatzmittel für die ausgefallenen Betriebsmittel herangezogen werden, nicht die einzige Möglichkeit einer Störungsschaltung. So könnte in einer Ausführungsvariante die Störungsschaltung z.B. unter Verwendung einer Umschaltung eines betroffenen Betriebsmittels in einen anderen ( 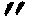 gesicherten") Betriebsmodus stattfinden. Naturgemäß hängt die Wahl der Art der Störungsschaltung von dem betrachteten Einsatzfall ab.

Zugleich mit dem Auftreten der Störung fhl wird in einem in der Steuerlogik des EWSX-Systems ablaufenden Fehlerbehandlungs-Prozess ein Fehlerbehandlungs-Zeitintervall t1 ausgelöst. Liegt die Störung auch nach Ablauf des Fehlerbehandlungs-Intervalls t1 noch vor, werden die Instanzen des betroffenen Anschlusses gAS bis hin zur msTTP-Instanz und dem unprotCTP-Objekt hin konfiguriert, und eine Protokollmeldung betreffend die durchgeführte Konfiguration wird an das Bedienpersonal ausgegeben.

Ergibt sich durch die Ersatzschaltung eine Änderung auf die Verfügbarkeit der Dienste, die dem gemultiplexten Anschluss zugeordnet sind, wobei dies aufgrund der Attribute der dienstbezogenen Elemente nach bekannter Art bestimmt wird, so wird erfindungsgemäß ein weiteres Zeitglied t2 begonnen, welches hier als Fehlerschutz-Zeitintervall oder kurz Schutzintervall bezeichnet werden soll. Nach Ablauf dieses Schutzintervalls t2 wird der Betriebszustand der für die Instanzen ab der protTTP-Instanz erforderlichen Betriebsmittel bzw. Ersatzbetriebsmittel anhand der Attribute der diesen zugeordneten Instanzen überprüft. Ist diese Bereitschaft nicht gegeben, wird die Konfiguration der nachfolgenden Kette, d.h. ab der protTTP-Instanz bis hin zur vc4TTP-Instanz, angestoßen. Die Überprüfung hinsichtlich der benötigten Betriebselemente erfolgt in dem hier dargestellten Beispiel anhand der Instanzen der Sicherungsgruppe MSG wie weiter unten dargestellt.

Die beiden Zeitintervalle t1,t2 können im Vergleich zu der Dauer der Durchführung der Ersatzschaltung, die ja innerhalb von z.B. 50 ms stattzufinden hat, wesentlich länger sein, in Abhängigkeit von dem betroffenen Dienst z.B. bis zu einigen Sekunden. Vorteilhafterweise sind die beiden Zeiten t1, t2 so gewählt, daß die beiden Zeitintervalle zugleich ablaufen, um die beiden Konfigurationsprozesse der Instanzen des Anschlusses einerseits und der dienstbezogenen Instanzen andererseits möglichst zur selben Zeit durchführen zu lassen. Die Zeitintervalle t1,t2 können im übrigen mit Hilfe bekannter Verfahren realisiert werden, z.B. mit einem programmierten Zeitgeber, der nach Ablauf der eingestellten Zeit ein Unterbrechungssignal der Programmsteuerung auslöst.

In einer vorteilhaften Variante der Erfindung wird das Schutzintervall t2 nur dann ausgelöst, wenn aufgrund des Betriebszustandes, der sich zum Zeitpunkt der Ausführung der Ersatzschaltung ergibt, die Instanzen ab der protTTP-Instanz voraussichtlich zu konfigurieren wären. Die Konfiguration wird freilich nicht zu diesem Zeitpunkt durchgeführt, sondern selbstverständlich erst nach Ablauf des Schutzintervalles t2 und aufgrund des zu jenem Zeitpunkt vorliegenden - mittlerweile gegebenenfalls geänderten - Betriebszustandes.

Beispielsweise sei angenommen, daß zu Anfang beide Anschlüsse gAS,sAS störungsfrei seien und keine administrativen Sperren vorliegen. Über den geschützten Anschluss gAS werden Dienste bereitgestellt. Fällt nun dieser Anschluss gAS aus, z.B. aufgrund einer Unterbrechung einer seriellen Strecke, werden nach Abwarten des Fehlerbehandlungs-Intervalls t1 die zugehörenden Instanzen bis hin zur unprotCTP-Instanz als deaktiviert konfiguriert, wodurch die korrespondierenden Betriebselemente als gesperrt gelten. Die protTTP-Instanz und die nachfolgenden Objekte dagegen bleiben im aktiven Zustand. Die Ersatzschaltung wurde dagegen bereits unmittelbar nach Eintritt der Unterbrechung durchgeführt und hierbei auch der Zeiger cp der protTTP-Instanz von der unprotCTP-Instanz des geschützten Anschlusses gAS (wie in der Zeichnung gezeigt) auf jenen des schützenden Anschlusses sAS umgelegt (wodurch die Konfiguration in der Sicherungsgruppe MSG nunmehr gegenüber der in der Zeichnung gezeigten gespiegelt ist). Da die schützende Seite sAS aktiv ist und keine Einschränkungen z.B. aufgrund einer administrativen Sperre aufweist, erfolgen an dieser Stelle keine weiteren Aktionen; die Ersatzschaltung wurde erfolgreich und ohne Dienstverlust durchgeführt.

Tritt zu einem späteren Zeitpunkt ein Fehler auf seiten des schützenden Anschlusses sAS auf, so werden auf dieser Seite gleichermaßen die Objekte bis hin zur unprotCTP-Instanz auf deaktiviert konfiguriert. Eine Ersatzschaltung kann nun nicht mehr durchgeführt werden, da beide Anschlüsse gAS,sAS nicht mehr verfügbar sind. Da das protTTP-Objekt noch aktiven Zustand aufweist, wird durch die Ersatzschaltung bzw. den für die Durchführung der Ersatzschaltung zuständigen Prozess das Fehlerschutz-Zeitintervall t2 angestoßen; wenn auch nach dessen Ablauf keiner der beiden Anschlüsse gAS,sAS verfügbar ist, also keine unprotCTP-Instanz aktiv ist, erfolgt die Konfiguration der protTTP-Objekts nach deaktiviert, ebenso für die nachfolgenden Objekte bis zur vc4TTP-Instanz, weshalb schließlich die betroffenen Dienste außer Betrieb genommen werden.

In einem anderen Fall liege jedoch eine administrative Sperre auf der schützenden Seite sAS vor, während der geschützte Anschluss gAS funktionsbereit ist und den gewünschten Dienst bereitstellt. Eine solche Situation kann z.B. auftreten, wenn Betriebsmittel des schützenden Anschlusses sAS gewartet werden. Fällt nun der geschützte Anschluss gAS aus, werden dessen Instanzen auf deaktiviert konfiguriert; es kann jedoch keine Ersatzschaltung zum schützenden Anschluss sAS erfolgen, da dieser gesperrt ist. Somit wird nun das Schutzintervall t2 in Gang gesetzt, und die weiteren Schritte erfolgen entsprechend dem vorhergehenden Fallbeispiel.

Im übrigen ist die Erfindung selbstverständlich nicht nur im Falle des Eintretens einer Störung, sondern gleichermaßen bei der Beendigung einer Störung einsetzbar, wobei dies eine vollständige oder auch nur teilweise Beseitigung der Störungssituation sein kann. Im Falle einer Störungsbehebung laufen die dem Fehlerbehandlungs- bzw. Fehlerschutz-Intervall zugeordneten Vorgänge in gleicher Form ab, da die Auswertung hinsichtlich des vorliegenden Betriebszustandes durchgeführt wird und es belanglos ist, wie dieser Zustand (nämlich durch Eintreten oder Beheben einer Störung) zustande gekommen ist. Freilich ist im Falle der Störungsbehebung zu berücksichtigen, daß im Rahmen der Störungsschaltung nun an Stelle der Außerbetriebnahme der betroffenen Betriebselementen deren Wiederinbetriebnahme tritt, und des weiteren entsprechende Ersatzbetriebsmittel, sofern diese aktiviert waren und nunmehr durch die Störungsbehebung entlastet sind, wieder zurück in den Bereitschaftszustand versetzt werden.

## Patentansprüche

1. Verfahren zur Behandlung einer Störungssituation innerhalb eines Netzknotens eines Telekommunikationsnetzes, wobei seitens des Netzknotens Betriebsmittel zur Durchführung von Telekommunikationsdiensten sowie eine Steuerungslogik mit Instanzen zur Verwaltung der Betriebsmittel und der diesen zugeordneten Steuerelemente vorgesehen sind, bei welchem
- eine Störung (fhl) hinsichtlich zumindest eines Betriebsmittels festgestellt wird,
- woraufhin eine Störungsschaltung eingeleitet wird, wobei das zumindest eine von der Störung betroffene Betriebsmittel außer Betrieb genommen wird und im Falle, daß entsprechende Ersatzbetriebsmittel vorgesehen und bereit sind, von diesen die Aufgaben des zumindest einen Betriebsmittels übernommen werden,
- sowie nach Ablauf eines Fehlerbehandlungs-Zeitintervalls (t1) ab Feststellung der Störung gemäß einer vorgegebenen Fehlerbehandlungs-Vorschrift ausgewählte Instanzen aufgrund des zu diesem Zeitpunkt vorliegenden Betriebszustandes der Betriebsmittel bzw. Ersatzbetriebsmittel einschließlich der Steuerelemente konfiguriert werden,
**dadurch gekennzeichnet,**
daß von der Störungsschaltung ein vom Fehlerbehandlungs-Zeitintervall unabhängiges Fehlerschutz-Zeitintervall (t2) ausgelöst wird und
daß nach Ablauf des Fehlerschutz-Zeitintervalls (t2) gemäß einer vorgegebenen Fehlerschutz-Vorschrift ausgewählte Instanzen aufgrund des zu diesem Zeitpunkt vorliegenden Betriebszustandes der Betriebsmittel bzw. Ersatzbetriebsmittel einschließlich der Steuerelemente konfiguriert werden.

2. Verfahren nach Anspruch 1,
**dadurch gekennzeichnet,** daß das Fehlerschutz-Zeitintervall (t2) nur dann ausgelöst wird, wenn bei Anwendung der Fehlerschutz-Vorschrift auf den aufgrund des Einleitens der Störungsschaltung sich ergebenden Betriebszustand zumindest eine Instanz ausgewählt würde.

3. Verfahren nach Anspruch 1 oder 2,
**dadurch gekennzeichnet,** daß das Fehlerschutz-Zeitintervall (t2) zugleich mit dem Fehlerbehandlungs-Zeitintervall (t1) abläuft.

4. Verfahren nach einem der Ansprüche 1 bis 3,
**dadurch gekennzeichnet,** daß die Fehlerbehandlungs-Vorschrift zumindest jene Instanzen, welche den durch Ersatzmittel ersetzbaren Betriebsmitteln und Steuerelementen sowie den diesen zugeordneten Ersatzmitteln entsprechen, betrifft, wogegen die Fehlerschutz-Vorschrift die übrigen Instanzen betrifft.

5. Verfahren nach einem der Ansprüche 1 bis 4,
**dadurch gekennzeichnet,** daß es bei zumindest teilweiser Behebung der Störung hinsichtlich zumindest eines Betriebsmittels ausgeführt wird, wobei jedoch in der Störungsschaltung das zumindest eine von der Störungsbehebung betroffene Betriebsmittel in Betrieb genommen wird und zugeordnete Ersatzbetriebsmittel, sofern diese durch die Inbetriebnahme des zumindest einen Betriebsmittels entlastet sind, wieder in Bereitschaft versetzt werden.
